# FASCICULE DE BREVET EUROPEEN

(11) **EP 2 917 544 B1**
(45) Date de publication et mention de la délivrance du brevet: **31.05.2017**
(21) Numéro de dépôt: 13791850.4
(22) Date de dépôt: 21.10.2013
(51) Int. Cl.: F02D 41/14, G05D 17/00

(54) **PROCÉDÉ DE FILTRAGE D'UN COUPLE DE CONSIGNE MOTEUR LORS D'UN PASSAGE DES JEUX MOTEUR**
VERFAHREN ZUM FILTERN EINES MOTORREFERENZDREHMOMENTS BEIM DURCHGANG DURCH EIN MOTORSPIEL
METHOD FOR FILTERING AN ENGINE REFERENCE TORQUE WHEN PASSING THROUGH ENGINE LASH

(30) Priorité: 09.11.2012 FR 1260650
(43) Date de publication de la demande: 16.09.2015
(73) Titulaire: Peugeot Citroën Automobiles SA, 78140 Vélizy Villacoublay (FR)
(72) Inventeur: THOMAS, Mathieu, 78220 Viroflay (FR); CHARLES, Juliette, 78510 Triel Sur Seine (FR)
(86) Numéro de dépôt international: PCT/FR2013/052513
(87) Numéro de publication internationale: WO 2014/072606

(56) Documents cités:
- WO-A2-2010/004151
- US-A1- 2010 017 054
- US-A1- 2011 313 636

## Description

L'invention porte sur un procédé de filtrage d'un couple de consigne moteur lors d'un passage des jeux moteur.

L'invention s'applique au domaine du contrôle de commande des véhicules équipés d'un Groupe Moto-Propulseur (GMP) thermique essence ou diesel avec une boîte de vitesses de type manuelle (BVM), automatisée (BVA), pilotée (BVMP) ou à double embrayage (DCT).

De tels véhicules sont équipés d'un calculateur permettant d'adapter de manière automatique le point de fonctionnement de chacun des organes du véhicule, en particulier le moteur thermique, afin de respecter la volonté du conducteur en termes de couple demandé. Pour obtenir un agrément de conduite optimal, le calculateur met en oeuvre deux types de filtrage du couple demandé par le conducteur réalisés à l'aide d'un module d'agrément préventif et d'un module d'agrément curatif. Comme p. ex. notamment dans le document brevet WO 2010/004151 et US 2011/0313636.

Le module d'agrément préventif assure ainsi un filtrage du couple de consigne correspondant à la volonté du conducteur afin de passer les jeux moteur en limitant au maximum les à-coups de la chaîne de traction. On appelle jeux moteur le phénomène de torsion des éléments de transmission entre le moment où le moteur thermique se pose sur ses cales et le moment où le moteur thermique entraîne le véhicule. Les jeux moteur correspondent ainsi au couple appliqué pour lequel ni le moteur thermique ni la roue ne s'entraînent l'un avec l'autre lors d'une phase transitoire d'accélération.

Le module d'agrément curatif permet d'atténuer les éventuelles oscillations du régime moteur résultant du passage des jeux moteur. A cet effet, il génère un couple en opposition de phase avec le régime moteur.

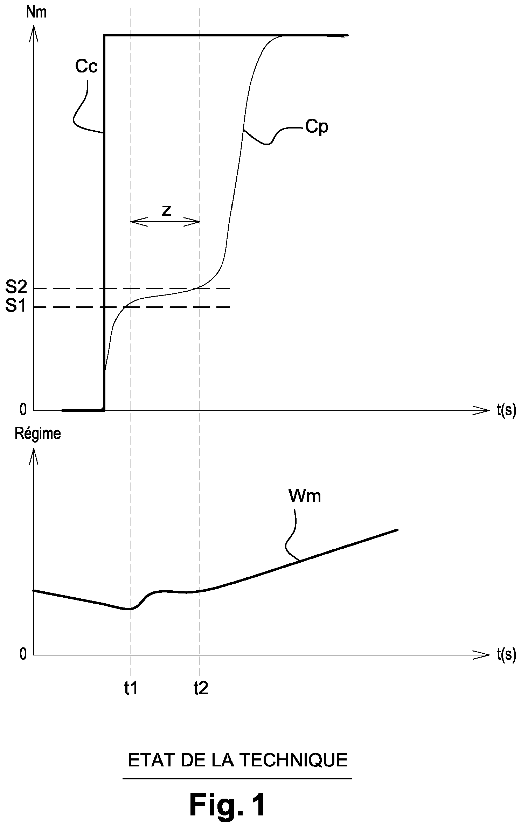

Dans les procédés de détection des jeux moteur existants, le calculateur prend en compte un premier seuil de couple S1 correspondant à l'instant t1 d'entrée dans les jeux moteur et un deuxième seuil de couple S2 correspondant à l'instant t2 de sortie des jeux moteur. Ainsi, comme cela est bien visible sur la figure 1, le module d'agrément filtre un couple de consigne Cc entre les deux instants t1 et t2 définissant la zone de passage Z des jeux moteurs. Une telle filtration induit la génération d'un couple préventif Cp permettant de réduire les à-coups sur la zone de passage Z des jeux moteur. Une fois le passage des jeux terminé à l'instant t2, le couple préventif Cp rejoint rapidement le couple de consigne Cc correspondant à la volonté conducteur. Le régime moteur Wm observable lors de cette phase d'accélération est représenté dans la partie basse de la figure 1.

Ces deux seuils de couple S1 et S2, qui sont figés, sont obtenus par une calibration effectuée sur plusieurs véhicules de référence. Autrement dit, le calculateur fonctionne de manière statique, sans prendre en compte la dispersion des cales moteur ainsi que l'usure de celles-ci et de la chaîne de traction. Les seuils calibrés ne seront donc pas optimaux sur tous les véhicules et ne seront pas adaptés à des moteurs vieillissants, ce qui aura tendance à détériorer l'agrément de conduite.

L'invention vise à remédier efficacement à ces inconvénients en proposant un procédé de filtrage d'un couple de consigne moteur lors d'un passage de jeux moteur comportant les étapes suivantes:
- déterminer un couple de consigne moteur,
- détecter un instant d'entrée dans les jeux moteur et un instant de sortie des jeux moteur définissant une zone de passage des jeux moteur,
- filtrer le couple de consigne moteur dans la zone de passage des jeux moteur, et
- appliquer si besoin un couple de correction en opposition de phase avec un régime du moteur thermique,
caractérisé en ce que l'instant d'entrée dans les jeux moteur est détecté à partir d'une variation du régime du moteur thermique ou d'une variation du couple de correction.

L'invention permet ainsi de détecter le passage des jeux moteur et d'adapter la commande en couple du moteur à chaque nouvelle accélération. La dispersion des cales ainsi que l'usure de celles-ci et de la chaîne de traction sont donc automatiquement pris en compte, ce qui implique un agrément de conduite optimal dans toutes les situations de vie du véhicule et ce, quel que soit l'état d'usure du véhicule. En outre, l'invention apporte un gain de temps de mise au point dans la mesure où il n'y a plus besoin de calibrer les seuils d'entrée et de sortie des jeux moteurs.

Selon une mise en oeuvre, le choix de la variable à prendre en considération pour détecter l'instant d'entrée dans les jeux moteur est effectué en fonction du niveau de bruit associé au régime du moteur. Ainsi, dans le cas où le régime du moteur n'est pas bruité, l'instant d'entrée dans les jeux moteur est détecté à partir de la variation du régime du moteur et dans le cas où le régime du moteur est bruité, l'instant d'entrée dans les jeux moteur est détecté à partir de la variation du couple de correction.

Selon une mise en oeuvre, pour déterminer si le régime du moteur est bruité ou non, un gradient du régime du moteur est comparé avec une valeur seuil.

Selon une mise en oeuvre, la valeur seuil du gradient du régime du moteur est de l'ordre de 100 tours/min/s.

Selon une mise en oeuvre, l'instant d'entrée dans les jeux moteur est détecté lorsqu'un gradient du régime du moteur dépasse une valeur seuil.

Selon une mise en oeuvre, la valeur seuil du gradient du régime du moteur est comprise entre 20 et 40 tour/min/s.

Selon une mise en oeuvre, l'instant d'entrée dans les jeux moteur est détecté lorsqu'un gradient du couple de correction passe sous une valeur seuil.

Selon une mise en oeuvre, la valeur seuil du gradient du couple de correction est comprise entre -1.5 N.m et -3 N.m.

Selon une mise en oeuvre, l'instant de sortie des jeux moteur est détecté après l'expiration d'une durée de basculement du moteur commençant à partir de l'instant d'entrée dans les jeux moteur.

Selon une mise en oeuvre, la durée de basculement du moteur est déterminée à partir d'une cartographie établissant une correspondance entre la durée de basculement du moteur et un couple de données composé du régime du moteur et d'un rapport de boîte de vitesses engagé.

Selon une mise en oeuvre, le couple de consigne moteur est déterminé à partir du régime du moteur, d'un rapport de boîte de vitesses engagé, et d'une position de la pédale d'accélérateur actionnée par le conducteur.

L'invention sera mieux comprise à la lecture de la description qui suit et à l'examen des figures qui l'accompagnent. Ces figures ne sont données qu'à titre illustratif mais nullement limitatif de l'invention.
La figure 1, déjà décrite, montre des représentations graphiques du couple de consigne, du couple préventif, et du régime moteur observables lors de la mise en oeuvre d'un procédé selon l'état de la technique ;
La figure 2 montre une représentation schématique d'un système de gestion de la commande en couple d'un moteur thermique selon l'invention;

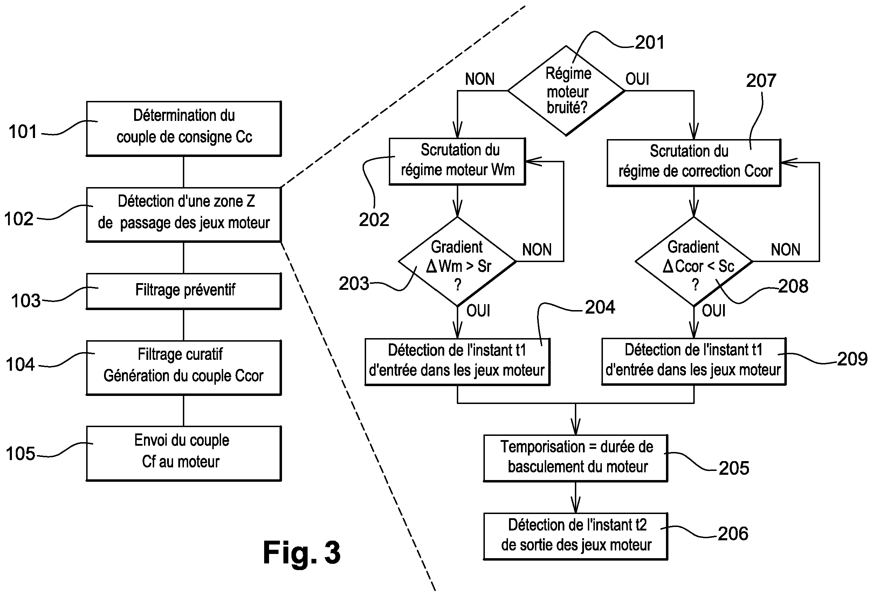

La figure 3 montre un diagramme des étapes du procédé de filtrage d'un couple de consigne moteur selon l'invention mis en oeuvre avec le système de la figure 2;
La figure 4 montre des représentations graphiques du couple de consigne, du couple préventif, et du régime moteur lors de la mise en oeuvre du procédé selon l'invention pour deux véhicules munis de cales moteur ayant des états d'usure différents.

Les éléments identiques, similaires, ou analogues conservent la même référence d'une figure à l'autre.

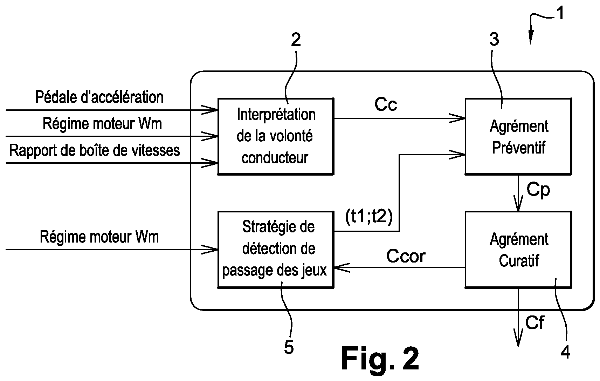

La figure 2 présente un système 1 de gestion de la commande en couple d'un moteur thermique intégré dans un calculateur moteur. Ce système 1 comporte un module 2 d'interprétation de la volonté du conducteur, ainsi qu'un module 3 d'agrément préventif, et un module 4 d'agrément curatif interagissant avec un module 5 de détection de passage des jeux moteur.

Plus précisément, le module 2 détermine dans une étape 101 un couple Cc, dit couple de consigne, à partir du régime moteur Wm, du rapport de boîte de vitesses engagé et de la position de la pédale d'accélérateur actionnée par le conducteur afin de retranscrire la volonté du conducteur.

Le couple de consigne Cc est ensuite filtré dans une étape 103 à l'aide du module 3 d'agrément préventif afin de limiter au maximum les à-coups dans une zone Z de passage des jeux moteur. Cette zone Z aura été détectée préalablement par le module 5 au cours d'une étape 102 explicitée plus en détails ci-après.

A cet effet, le module 3 détermine dans un premier temps un couple effectif Ce qui est ensuite traduit en un couple, dit couple préventif Cp, prenant en compte les pertes du moteur. Ainsi, le couple préventif Cp est égal à la somme du couple effectif Ce issu du filtrage et d'un couple Cf de pertes moteur: Cp=Ce + Cf. Le couple Cf de pertes moteur est le couple nécessaire au moteur pour faire avancer le véhicule. Ce couple Cf de pertes moteur prend notamment en compte les frottements moteur ainsi que les pertes liées aux accessoires tels que l'alternateur.

Le module 4 d'agrément curatif surveille l'évolution du régime moteur Wm et atténue l'oscillation de régime éventuelle en générant, dans une étape 104, un couple de correction Ccor en opposition de phase avec le régime moteur Wm.

Le couple résultant est le couple final Cf envoyé au moteur dans une étape 105 puis converti en commande des différents organes, comme par exemple en une quantité de carburant à injecter dans les cylindres du moteur thermique.

Le module 5 de détection de passage des jeux moteur détecte l'instant d'entrée t1 et l'instant de sortie t2 des jeux moteurs définissant la zone Z de passage des jeux moteur. En l'occurrence, cette zone Z de passage des jeux moteur est détectée en se basant sur l'évolution du régime du moteur Wm ou sur l'évolution du couple de correction Ccor. Le choix de la variable à prendre en considération est effectué en fonction du niveau de bruit associé au régime moteur Wm.

Pour déterminer dans une étape 201 si le régime moteur Wm est bruité, le gradient du régime moteur ΔWm est comparé avec un seuil Sb. Ce seuil Sb est environ 3 fois plus grand que le seuil Sr utilisé pour la détection de l'instant t1 d'entrée dans les jeux moteur. Ce seuil Sb vaut par exemple 100 tours/min/s. Si le gradient du régime moteur ΔWm est supérieur au seuil Sb, on considère que le régime moteur Wm est bruité. Dans le cas contraire, si le gradient du régime moteur ΔWm est inférieur au seuil Sb, on considère que le régime moteur Wm n'est pas bruité.

Dans le cas où le régime Wm n'est pas bruité, le module 5 détecte l'instant t1 d'entrée dans les jeux moteur à partir du régime moteur Wm. A cet effet, le gradient de régime ΔWm est scruté dans une étape 202 et dès qu'il dépasse une valeur seuil Sr (cf. étape 203), alors le module 5 envoie dans une étape 204 une information d'entrée dans la zone Z de jeux moteur au module 3 d'agrément préventif. Cette valeur seuil Sr est par exemple comprise entre 20 et 40 tour/min/s. L'augmentation brusque de régime Wm s'explique par le fait que lorsque le moteur commence à se poser sur ses cales, le moteur commence à être retenu. Le module 5 surveille l'évolution du régime moteur Wm dans une plage allant par exemple du couple de pertes Cf au couple d'entrée dans les jeux moteur.

Le module 3 applique alors un filtrage adapté à la zone Z de passage des jeux moteur permettant au moteur thermique de se poser sans à-coups sur ses cales.

On attend ensuite l'expiration de la durée de basculement du moteur via une étape de temporisation 205. Une fois cette durée expirée, le module 5 indique, dans une étape 206, l'instant t2 de sortie de la zone Z des jeux au module 3 d'agrément préventif. Le couple préventif Cp rejoint alors rapidement le couple de consigne Cc. On note ainsi que la pente du couple préventif Cp est beaucoup plus faible dans la zone de passage des jeux qu'après le passage des jeux.

La durée de basculement du moteur thermique est une donnée obtenue de préférence à partir d'une cartographie établissant une correspondance entre la durée de basculement du moteur et un couple de données composé du régime moteur Wm et du rapport de boîte de vitesses engagé. Dans un exemple, la durée de basculement du moteur a une valeur située autour de 30 ms. Cette durée commence à courir à compter de la détection de l'instant t1 d'entrée dans les jeux moteur.

Pour éviter le risque de fausse détection du passage des jeux moteur à partir du régime moteur Wm dans le cas où ce dernier est bruité, le module 5 détecte le passage des jeux moteur à partir de l'évolution du couple de correction Ccor qui est l'image inverse du régime moteur Wm.

Les étapes de détection seront donc semblables à celles décrites précédemment sauf que l'instant t1 d'entrée dans les jeux moteur est détecté à l'aide d'un gradient négatif. Plus précisément, le gradient du couple de correction ΔCcor est scruté dans une étape 207 et dès qu'il passe sous une valeur seuil Sc (cf. étape 208), alors le module 5 envoie dans une étape 209 une information d'entrée dans la zone Z de jeux moteur au module 3 d'agrément préventif. Cette valeur seuil Sc est par exemple comprise entre -1.5 et -3 Nm. L'instant t2 de sortie des jeux sera détecté comme précédemment après l'expiration de la durée de basculement du moteur (cf étapes 205 et 206).

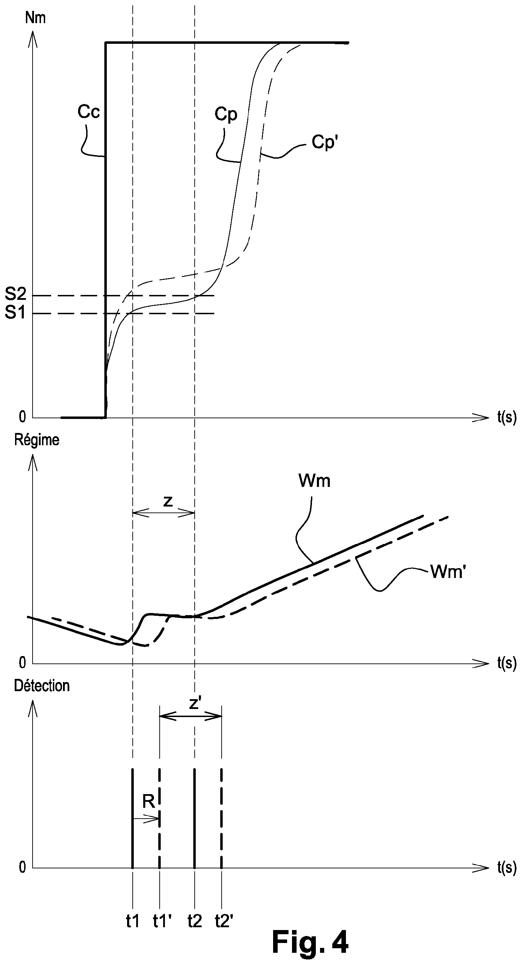

La figure 4 montre des représentations graphiques de couples préventifs correspondant respectivement à un véhicule muni de cales moteur neuves (courbe Cp en trait plein) et à un véhicule muni de cales usagées (courbe Cp' en trait discontinu) pour un même couple de consigne Cc.

Il est à noter que pour le véhicule muni de cales neuves, la prestation avec la stratégie de détection de passage des jeux est identique à la stratégie d'agrément préventif de l'état de la technique basée sur l'utilisation de seuils fixes S1 et S2. En effet, dans ce cas, la détection des instants d'entrée t1 et de sortie t2 des jeux moteur coïncident avec les instants t1 et t2 détectés avec le procédé selon l'état de la technique.

En revanche, pour le véhicule doté de cales usagées, la détection d'entrée dans les jeux moteur est effectuée plus tard que pour le véhicule muni de cales neuves, en concordance avec le régime moteur Wm. En effet, comme cela est bien visible dans la partie basse de la figure 4, l'instant d'entrée t1' dans les jeux moteur pour le véhicule à cales usagées est retardé d'un retard R par rapport à l'instant d'entrée t1 dans les jeux moteur pour le véhicule muni de cales neuves. Ce retard R s'explique par le fait que les cales usées sont moins efficaces pour absorber l'énergie du moteur de sorte que le moteur arrive plus tard en butée de cale. La zone Z de passage des jeux moteur pour le moteur à cales neuves et la zone Z' de passage des jeux moteur pour le moteur à cales usagées sont ainsi superposées l'une par rapport à l'autre.

On remarque que si on avait appliqué pour les cales usagées les mêmes seuils de jeux moteur que pour les cales neuves, le moteur aurait ralenti avant de se poser sur ses cales puis augmenté progressivement alors que le moteur n'aurait pas encore franchi la zone Z' de passage des jeux moteur, ce qui aurait entraîné des à-coups. Alors qu'en retardant la détection de l'entrée dans les jeux moteur et donc le filtrage correspondant en tenant compte de l'usure des cales moteur, l'invention permet d'améliorer la commande en couple du moteur et l'agrément de conduite tout au long de la vie du véhicule automobile.

Bien entendu, l'homme du métier pourra apporter des modifications aux paramètres du procédé précédemment décrit sans sortir du cadre de l'invention. Ainsi, les différents seuils de détection indiqués Sb, Sr, Sc pourront être adaptés en fonction du véhicule. En outre, il est possible de filtrer le régime moteur Wm pour améliorer la détection de la zone Z, Z' de passage des jeux moteur. De manière équivalente, il serait également possible de faire appel à un capteur de déplacement du moteur thermique prenant la forme d'un accéléromètre installé sur le moteur pour détecter l'instant d'entrée t1, t1' dans les jeux moteur.

## Revendications

1. Procédé de filtrage d'un couple de consigne moteur lors d'un passage de jeux moteur comportant les étapes suivantes:
- déterminer (101) un couple de consigne moteur (Cc),
- détecter (102) un instant d'entrée (t1, t1') dans les jeux moteur et un instant (t2, t2') de sortie des jeux moteur définissant une zone (Z, Z') de passage des jeux moteur,
- filtrer (103) le couple de consigne moteur (Cc) dans la zone (Z) de passage des jeux moteur, et
- appliquer (104) si besoin un couple de correction (Ccor) en opposition de phase avec un régime (Wm) du moteur thermique,
**caractérisé en ce que** l'instant d'entrée (t1, t1') dans les jeux moteur est détecté à partir d'une variation du régime (Wm) du moteur thermique ou d'une variation du couple de correction (Ccor).

2. Procédé selon la revendication 1, **caractérisé en ce que** dans le cas où le régime (Wm) du moteur n'est pas bruité, l'instant d'entrée (t1, t1') dans les jeux moteur est détecté à partir de la variation du régime (Wm) du moteur et dans le cas où le régime (Wm) du moteur est bruité, l'instant d'entrée (t1, t1') dans les jeux moteur est détecté à partir de la variation du couple de correction (Ccor).

3. Procédé selon la revendication 2, **caractérisé en ce que** pour déterminer si le régime (Wm) du moteur est bruité ou non, un gradient (ΔWm) du régime du moteur est comparé avec une valeur seuil (Sb).

4. Procédé selon la revendication 3, **caractérisé en ce que** la valeur seuil (Sb) du gradient du régime du moteur est de l'ordre de 100 tours/min/s.

5. Procédé selon l'une des revendications 1 à 4, **caractérisé en ce que** l'instant d'entrée (t1, t1') dans les jeux moteur est détecté lorsqu'un gradient (ΔWm) du régime du moteur dépasse une valeur seuil (Sr).

6. Procédé selon la revendication 5, **caractérisé en ce que** la valeur seuil (Sr) du gradient du régime du moteur est comprise entre 20 et 40 tour/min/s.

7. Procédé selon l'une des revendications 1 à 6, **caractérisé en ce que** l'instant d'entrée (t1, t1') dans les jeux moteur est détecté lorsqu'un gradient (ΔCcor) du couple de correction passe sous une valeur seuil (Sc).

8. Procédé selon la revendication 7, **caractérisé en ce que** la valeur seuil (Sc) du gradient du couple de correction est comprise entre -1.5 N.m et -3 N.m.

9. Procédé selon l'une des revendications 1 à 8, **caractérisé en ce que** l'instant de sortie (t2, t2') des jeux moteur est détecté après l'expiration d'une durée de basculement du moteur commençant à partir de l'instant d'entrée (t1, t1') dans les jeux moteur.

10. Procédé selon l'une des revendications 9, **caractérisé en ce que** la durée de basculement du moteur est déterminée à partir d'une cartographie établissant une correspondance entre la durée de basculement du moteur et un couple de données composé du régime du moteur (Wm) et d'un rapport de boîte de vitesses engagé.

11. Procédé selon l'une des revendications 1 à 10, **caractérisé en ce que** le couple de consigne moteur (Cc) est déterminé à partir du régime du moteur (Wm), d'un rapport de boîte de vitesses engagé, et d'une position de la pédale d'accélérateur actionnée par le conducteur.

## Patentansprüche

1. Verfahren zum Filtern eines Motor-Solldrehmoments bei einem Durchgang durch Motorspiele, das die folgenden Schritte umfasst:
- Bestimmen (101) eines Motor-Solldrehmoments (Cc),
- Erfassen (102) eines Eingangsaugenblicks (t1, t1') in die Motorspiele und eines Augenblicks (t2, t2') des Ausgangs aus den Motorspielen, die eine Zone (Z, Z') des Durchgangs durch die Motorspiele bilden,
- Filtern (103) des Motor-Solldrehmoments (Cc) in der Zone (Z) des Durchgangs durch die Motorspiele, und
- bei Bedarf Anlegen (104) eines Korrekturmoments (Ccor) mit entgegengesetzter Phase mit einer Drehzahl (Wm) der Brennkraftmaschine,
**dadurch gekennzeichnet, dass** der Eingangsaugenblick (t1, t1') in die Motorspiele ausgehend von einer Variation der Drehzahl (Wm) der Brennkraftmaschine oder einer Variation des Korrekturdrehmoments (Ccor) erfasst wird.

2. Verfahren nach Anspruch 1, **dadurch gekennzeichnet, dass** in dem Fall, in dem die Motordrehzahl (Wm) kein Rauschen aufweist, der Eingangsaugenblick (t1, t1') in die Motorspiele ausgehend von der Variation der Drehzahl (Wm) des Motors erfasst wird, und in dem Fall, in dem die Drehzahl (Wm) des Motors Rauschen aufweist, der Eingangsaugenblick (t1, t1') in die Motorspiele ausgehend von der Variation des Korrekturdrehmoments (Ccor) erfasst wird.

3. Verfahren nach Anspruch 2, **dadurch gekennzeichnet, dass** zum Bestimmen, ob die Drehzahl (Wm) Rauschen aufweist oder nicht, ein Gradient (ΔWm) der Drehzahl des Motors mit einem Schwellenwert (Sb) verglichen wird.

4. Verfahren nach Anspruch 3, **dadurch gekennzeichnet, dass** der Wert (Sb) des Gradienten der Drehzahl des Motors in der Größenordnung von 100 Umdrehungen/Min./s liegt.

5. Verfahren nach einem der Ansprüche 1 bis 4, **dadurch gekennzeichnet, dass** der Eingangsaugenblick (t1, t1') in die Motorspiele erfasst wird, wenn ein Gradient (ΔWm) der Drehzahl des Motors einen Schwellenwert (Sr) überschreitet.

6. Verfahren nach Anspruch 5, **dadurch gekennzeichnet, dass** der Schwellenwert (Sr) des Gradienten der Drehzahl des Motors zwischen 20 und 40 Umdrehungen/Min./s liegt.

7. Verfahren nach einem der Ansprüche 1 bis 6, **dadurch gekennzeichnet, dass** der Eingangsaugenblick (t1, t1') in die Motorspiele erfasst wird, wenn ein Gradient (ΔCcor) des Korrekturdrehmoments unter einen Schwellenwert (Sc) sinkt.

8. Verfahren nach Anspruch 7, **dadurch gekennzeichnet, dass** der Schwellenwert (Sc) des Gradienten des Korrekturdrehmoments zwischen -1,5 N.m und -3 N.m liegt.

9. Verfahren nach einem der Ansprüche 1 bis 8, **dadurch gekennzeichnet, dass** der Ausgangsaugenblick (t2, t2') aus den Motorspielen nach dem Ablaufen einer Wechseldauer des Motors erfasst wird, die ausgehend von dem Eingangsaugenblick (t1, t1') in die Motorspiele beginnt.

10. Verfahren nach einem der Ansprüche 9, **dadurch gekennzeichnet, dass** die Wechseldauer des Motors ausgehend von einer Kartographie bestimmt wird, die eine Entsprechung zwischen der Wechseldauer des Motors und einem Paar von Daten, das aus der Motordrehzahl (Wm) und einem eingelegten Gang des Schaltgetriebes besteht, erstellt.

11. Verfahren nach einem der Ansprüche 1 bis 10, **dadurch gekennzeichnet, dass** das Motor-Solldrehmoment (Cc) ausgehend von der Drehzahl des Motors (Wm), eines eingerückten Gangs des Schaltgetriebes und einer Position des Gaspedals, das von dem Fahrer betätigt wird, bestimmt wird.

## Claims

1. A method for filtering an engine reference torque when passing through engine lash comprising the following steps:
- determining (101) an engine reference torque (Cc),
- detecting (102) a time (t1, t1') of entering engine lash and a time (t2, t2') of exiting engine lash defining a zone (Z, Z') of passing through engine lash,
- filtering (103) the engine reference torque (Cc) in the zone (Z) of passing through engine lash, and
- - if need be - applying (104) a corrective torque (Ccor) in phase opposition with a speed (Wm) of the combustion engine,
**characterized in that** the time (t1, t1') of entering engine lash is detected from a variation in the speed (Wm) of the combustion engine or from a variation of the corrective torque (Cc).

2. The method according to claim 1, **characterized in that** in the case where the speed (Wm) of the engine is not noisy, the time (t1, t1') of entering engine lash is detected from the variation of the speed (Wm) of the engine, and in the case where the speed (Wm) of the engine is noisy, the time (t1, t1') of entering engine lash is detected from the variation of the corrective torque (Ccor).

3. The method according to claim 2, **characterized in that** to determine if the speed (Wm) of the engine is noisy or not, a gradient (ΔWm) of the speed of the engine is compared with a threshold value (Sb).

4. The method according to claim 3, **characterized in that** the threshold value (Sb) of the gradient of the speed of the engine is in the order of 100 revolutions/min/s.

5. The method according to one of claims 1 to 4, **characterized in that** the time (t1, t1') of entering engine lash is detected when a gradient (ΔWm) of the speed of the engine exceeds a threshold value (Sr).

6. The method according to claim 5, **characterized in that** the threshold value (Sr) of the gradient of the speed of the engine is comprised between 20 and 40 revolution/min/s.

7. The method according to one of claims 1 to 6, **characterized in that** the time (t1, t1') of entering engine lash is detected when a gradient (ΔCcor) of the corrective torque passes below a threshold value (Sc).

8. The method according to claim 7, **characterized in that** the threshold value (Sc) of the gradient of the corrective torque is comprised between -1.5 N.m and -3 N.m.

9. The method according to one of claims 1 to 8, **characterized in that** the time (t2, t2') of exiting engine lash is detected after expiry of a duration of switchover of the engine starting from the time (t1, t1') of entering engine lash.

10. The method according to one of claims 9, **characterized in that** the duration of switchover of the engine is determined from a mapping establishing a correspondence between the duration of switchover of the engine and a data pair composed of the speed of the engine (Wm) and a gear engaged on the gearbox.

11. The method according to one of claims 1 to 10, **characterized in that** the engine reference torque (Cc) is determined from the speed of the engine (Wm), a gear engaged on the gearbox, and a position of the accelerator pedal actuated by the driver.
